# EUROPÄISCHE PATENTANMELDUNG

(11) **EP 2 196 881 A1**
(43) Veröffentlichungstag der Anmeldung: **16.06.2010**
(21) Anmeldenummer: 08021094.1
(22) Anmeldetag: 04.12.2008
(51) Int. Cl.: G05B 19/409, G06F 3/048

(54) **Bedieneinrichtung zur Bedienung einer Maschine aus der Automatisierungstechnik**

(71) Anmelder: Siemens Aktiengesellschaft, 80333 München (DE)
(72) Erfinder: Frerking, Björn, 90419 Nürnberg (DE); Kiefner, Bernhard, 90765 Fürth-Poppenreuth (DE)

(57) **Zusammenfassung**

Die Erfindung betrifft eine Bedieneinrichtung zur Bedienung einer Maschine (11) aus der Automatisierungstechnik, wobei die Bedieneinrichtung (1) zum stationären Einbau in einen Bedienpult (10) der Maschine (11) und/oder in einen Schrank (12) der Maschine (11) ausgebildet ist, wobei die Bedieneinrichtung (1) einen berührungsempfindlichen Bildschirm (2) aufweist, wobei von dem Bildschirm (2) die Berührungsorte (4a,4b) von mindestens zwei an unterschiedlichen Stellen des Bildschirms (2) gleichzeitig stattfindenden Berührungen des Bildschirms (2) detektierbar sind, wobei die Bedieneinrichtung (1) derart ausgebildet ist, dass bei einer detektierten gleichzeitigen Änderung der Berührungsorte (4a,4b), entsprechend den örtlichen Verläufen der Berührungsorte (4a,4b), ein von dem Bildschirm (2) der Bedieneinrichtung (1) visualisiertes Objekt (3) auf dem Bildschirm (2) verändert dargestellt wird. Die Erfindung schafft eine Bedieneinrichtung (1) zur Bedienung einer Maschine (11) aus der Automatisierungstechnik, bei der ein an einem Bildschirm (2) der Bedieneinrichtung (1) visualisiertes Objekt (3) mittels einfacher Bedienhandlungen am Bildschirm (3) verändert werden kann und die unempfindlicher gegenüber die Bedieneinrichtung (1) umgebende Schmutzpartikel und Flüssigkeiten ist.

## Beschreibung

Die Erfindung betrifft eine Bedieneinrichtung zur Bedienung einer Maschine aus der Automatisierungstechnik.

Bei handelsüblichen Bedieneinrichtungen zur Bedienung von Maschinen aus der Automatisierungstechnik, wie z.B. Werkzeugmaschinen, Produktionsmaschinen und/oder Robotern, erfolgt das Verändern von auf dem Bildschirm der Bedieneinrichtung dargestellten Objekten, wie z.B. einem Werkstück, durch das Drücken von Tasten und/oder Bewegungen einer Maus. Das dargestellte Objekt kann dabei z.B. mittels Tasten- und/oder Mausbewegungen vergrößert und/oder verschoben werden.

Eine solche handelsübliche Bedienung ist aber für den Anwender recht komplex, weil die Bedienhandlungen, die er ausführen muss, um das am Bildschirm dargestellte Objekt zu verändern, komplexe Handbewegungen und das Drücken von Tasten erfordert.

Weiterhin sind die Tasten und die Maus anfällig gegenüber eindringende Schmutzpartikel und Flüssigkeiten. Weiterhin können über die Tasten in die Bedieneinrichtung Schmutzpartikel und Flüssigkeiten eindringen und die empfindliche Elektronik im Inneren der Bedieneinrichtung beschädigen, was zu einem Ausfall der Bedieneinrichtung oder zu Fehlfunktionen führen kann. Insbesondere im Umfeld von Maschinen aus der Automatisierungstechnik treten häufig Schmutzpartikel und Flüssigkeiten, welche z.B. durch einen Bearbeitungsvorgang eines Werkstücks entstehen, auf.

Aus der US 2006/0256090 ist eine Abdeckung, die mit Bedienelementen versehen ist und über ein vorhandenes Multipoint-Touch-Interface anbringbar ist, bekannt.

Aus der US 2006/0197750 ist aus dem Bereich der Konsumerelektronik ein in der Hand tragbares Gerät, dessen Bedienung mittels eines Multipoint-Touch-Technologie erfolgt, bekannt.

Weiterhin sind auch noch mit Beschleunigungssensoren ausgestattete Handschuhe bekannt, mit denen insbesondere virtuelle 3D-Gegenstände bewegt werden können. Der Einsatz eines solchen speziellen Handschuhs ist aber zum einen sehr kostenintensiv und zum anderen beim Einsatz in der Automatisierungstechnik wegen der harten Umgebungsbedingungen (z.B. Verschmutzung) nicht praktikabel.

Es ist Aufgabe der Erfindung, eine Bedieneinrichtung zur Bedienung einer Maschine aus der Automatisierungstechnik zu schaffen, bei der ein an einem Bildschirm der Bedieneinrichtung visualisiertes Objekt mittels einfacher Bedienhandlungen am Bildschirm verändert werden kann und die unempfindlicher gegenüber die Bedieneinrichtung umgebende Schmutzpartikel und Flüssigkeiten ist.

Diese Aufgabe wird gelöst durch eine Bedieneinrichtung zur Bedienung einer Maschine aus der Automatisierungstechnik, wobei die Bedieneinrichtung zum stationären Einbau in einen Bedienpult der Maschine und/oder in einen Schrank der Maschine ausgebildet ist, wobei die Bedieneinrichtung einen berührungsempfindlichen Bildschirm aufweist, wobei von dem Bildschirm die Berührungsorte von mindestens zwei an unterschiedlichen Stellen des Bildschirms gleichzeitig stattfindenden Berührungen des Bildschirms detektierbar sind, wobei die Bedieneinrichtung derart ausgebildet ist, dass bei einer detektierten gleichzeitigen Änderung der Berührungsorte, entsprechend den örtlichen Verläufen der Berührungsorte, ein von dem Bildschirm der Bedieneinrichtung visualisiertes Objekt auf dem Bildschirm verändert dargestellt wird.

Vorteilhafte Ausbildungen der Erfindung ergeben sich aus den abhängigen Ansprüchen.

Es erweist sich als vorteilhaft, wenn das Objekt vergrößert dargestellt wird, wenn die örtlichen Verläufe der Berührungsorte in entgegengesetzt und auseinander verlaufenden Richtungen verlaufen, da dann auf einfache Art und Weise das Objekt am Bildschirm vergrößert oder verkleinert dargestellt werden kann.

Ferner erweist es sich als vorteilhaft, wenn das Objekt verschoben dargestellt wird, wenn die örtlichen Verläufe der Berührungsorte in gleiche Richtungen verlaufen, da dann auf einfache Art und Weise das Objekt am Bildschirm verschoben werden kann.

Ferner erweist es sich als vorteilhaft, wenn das Objekt gedreht dargestellt wird, wenn die örtlichen Verläufe der Berührungsorte einen kreisbogenförmigen Verlauf aufweisen, da dann auf einfache Art und Weise das Objekt gedreht werden kann.

Ferner erweist es sich als vorteilhaft, wenn die Berührungsorte über dem am Bildschirm dargestellten Objekt liegen, da hierdurch eine besonders einfache Bedienung ermöglicht wird. Selbstverständlich können die Berührungsorte aber auch neben dem am Bildschirm dargestellten Objekt liegen, so dass z.B. zur Bedienung verwendete Finger nicht unbedingt über dem Objekt den Bildschirm zur Bedienung berühren müssen.

Ferner erweist es sich als vorteilhaft, wenn die Maschine aus der Automatisierungstechnik als Werkzeugmaschine, Produktionsmaschine und/oder als Roboter ausgebildet ist.

Ferner erweist es sich als vorteilhaft ein Bedienpult einer Maschine aus der Automatisierungstechnik mit der erfindungsgemäßen Bedieneinrichtung auszubilden.

Weiterhin erweist es sich als vorteilhaft, einen Schrank einer Maschine aus der Automatisierungstechnik mit der erfindungsgemäßen Bedieneinrichtung auszubilden.

Vorteilhafte Ausbildungen der Erfindung sind in der Zeichnung dargestellt. Dabei zeigen:
- FIG 1: eine erfindungsgemäße Bedieneinrichtung mit einem Bildschirm, auf dem ein Objekt dargestellt ist,
- FIG 2: eine erfindungsgemäße Bedieneinrichtung, bei der das Objekt vergrößert dargestellt ist,
- FIG 3: eine erfindungsgemäße Bedieneinrichtung, bei der das Objekt gedreht dargestellt ist,
- FIG 4: die erfindungsgemäße Bedieneinrichtung, bei der das Objekt verschoben dargestellt ist, und
- FIG 5: eine Maschine aus der Automatisierungstechnik mit einem Bedienpult und einem Schrank.

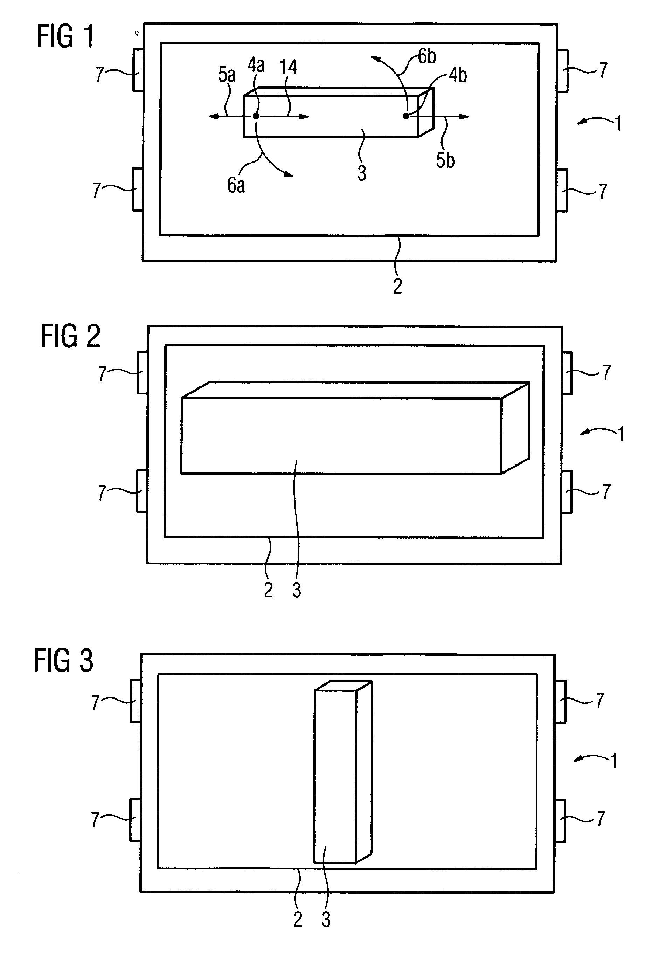

In FIG 1 ist in Form einer schematisierten Darstellung eine erfindungsgemäße Bedieneinrichtung 1 dargestellt. Die Bedieneinrichtung 1 weist einen berührungsempfindlichen Bildschirm 2 auf, wobei von dem Bildschirm 2 die Berührungsorte 4a und 4b von mindestens zwei an unterschiedlichen Stellen des Bildschirms gleichzeitig stattfindenden Berührungen des Bildschirms 2 detektierbar sind. Die Technologie, die das gleichzeitige Detektieren von zwei oder mehr Berührungen auf einem Bildschirm erlaubt, wird auch als Multi-Point-Touch-Technologie bezeichnet.

Die Bedieneinrichtung ist erfindungsgemäß derart ausgebildet, dass bei einer detektierten gleichzeitigen Änderung der Berührungsorte 4a und 4b, entsprechend den örtlichen Verläufen der Berührungsorte, ein von dem Bildschirm 2 der Bedieneinrichtung 1 visualisiertes Objekt 3, das im Rahmen des Ausführungsbeispiels als ein Werkstück ausgebildet ist, auf dem Bildschirm 2 verändert dargestellt wird.

Möchte der Bediener z.B. das Objekt 3 vergrößert dargestellt haben, so berührt er z.B. mit einem Finger der linken Hand das Objekt 3 auf dem Bildschirm am ersten Berührungsort 4a und mit einem Finger der rechten Hand am Berührungsort 4b.

Anschließend bewegt er gleichzeitig seinen Finger der linken Hand in Richtung des Pfeils 5a und seinen Finger der rechten Hand in Richtung des Pfeils 5b, wobei die beiden Finger während der Bewegung den Bildschirm berühren. Solchermaßen entsteht ein örtlicher Verlauf des ersten Berührungsorts 4a in Richtung des Pfeils 5a und ein örtlicher Verlauf des zweiten Berührungsorts 4b in Richtung des Pfeils 5b. Die gleichzeitige Änderung der Berührungsorte wird, wie schon beschrieben, von der Bedieneinrichtung 1 detektiert, ausgewertet und entsprechend den örtlichen Verläufen der Berührungsorte 4a und 4b wird das auf dem Bildschirm der Bedieneinrichtung visualisierte Objekt verändert dargestellt.

Wenn, wie oben beschrieben, die örtlichen Verläufe der Berührungsorte 4a und 4b in entgegengesetze und in auseinander laufenden Richtungen verlaufen, wird der Objekt 3 vergrößert dargestellt. FIG 2 zeigt das Objekt 3 entsprechend vergrößert dargestellt. Entsprechend wird das Objekt verkleinert dargestellt, wenn die örtlichen Verläufe der Berührungsorte 4a und 4b in entgegengesetzt und in zueinander verlaufenden Richtungen verlaufen.

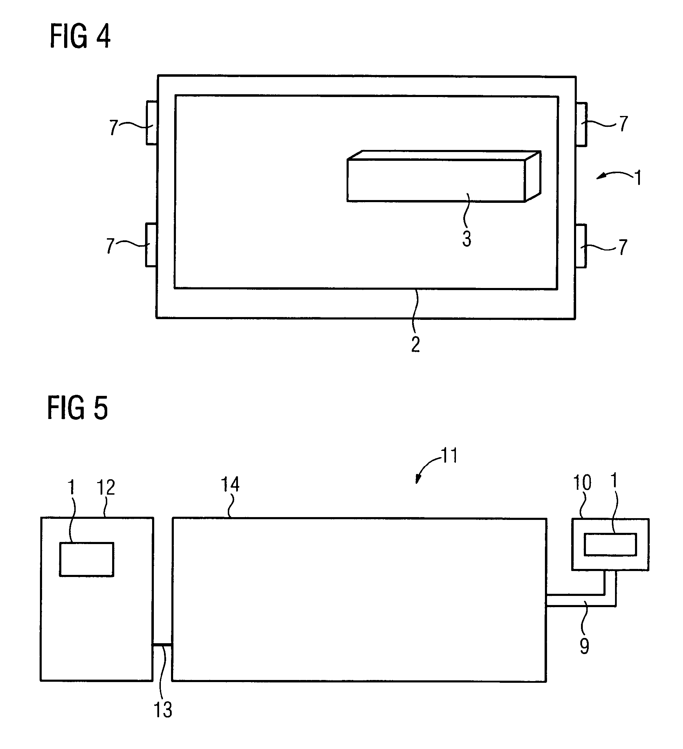

Wenn die örtlichen Verläufe der Berührungsorte gleichzeitig in gleiche Richtungen verlaufen, d.h. z.B. der erste Berührungsort 4a in Richtung des Pfeils 14 und der zweite Bedienungsort 4b gleichzeitig in Richtung des Pfeils 5b bewegt wird, wird das Objekt 3 verschoben auf dem Bildschirm 2 dargestellt. In FIG 4 ist das solchermaßen verschobene Objekt 3 dargestellt.

Wenn der linke Finger und damit der erste Berührungsort 4a in Richtung des Pfeils 6a bewegt wird, und somit der erste Berührungsort 4a einen kreisbogenförmigen Verlauf aufweist und gleichzeitig der rechte Finger in Richtung des Pfeils 6b bewegt wird, d.h. der zweite Berührungsort 4b in Richtung des Pfeils 6b bewegt wird und somit der örtliche Verlauf des Berührungsorts 4b einen kreisbogenförmigen Verlauf aufweist, dann wird das Objekt gedreht dargestellt, was in FIG 3 dargestellt ist.

Die Bedieneinrichtung 1 ist dabei zum stationären Einbau in ein Bedienpult und/oder einen Schrank einer Maschine aus der Automatisierungstechnik ausgebildet. Hierzu weist im Rahmen des Ausführungsbeispiels die Bedieneinrichtung 1 Befestigungsmittel 7 auf, die z.B. in Form von Halterungen vorliegen können. Die Bedieneinrichtung kann hierzu z.B. aber auch auf der Rückseite und/oder auf den seitlichen Seiten der Bedieneinrichtung angeordnete Spannmittel aufweisen, mit der die Bedieneinrichtung in den Bedienpult und/oder im Schrank, insbesondere in der Schränktür, befestigt werden kann und solchermaßen stationär eingebaut werden kann. Die Bedieneinrichtung kann aber hierzu z.B. seitlich auch nur Nuten oder Löcher aufweisen in die Befestigungsmittel, wie z.B. Schrauben, eingreifen. Es sind hier eine Vielzahl von Befestigungsmöglichkeiten zum statischen Einbau der Bedieneinrichtung in einen Bedienpult und/oder einen Schrank einer Maschine aus der Automatisierungstechnik möglich.

In FIG 5 ist in Form einer schematisierten Darstellung eine Maschine aus der Automatisierungstechnik, die im Rahmen des Ausführungsbeispiels als Werkzeugmaschine 11 ausgebildet ist, dargestellt. Ein Bedienpult 10 ist dabei über einen Arm 9 an einem Gehäuse 14, das im Wesentlichen die mechanischen Teile der Werkzeugmaschine, die Geber der Werkzeugmaschine und die Motoren der Werkzeugmaschine enthält, verbunden. Die Bedieneinrichtung 1 ist dabei in dem Bedienpult 10 zur Bedienung der Maschine stationär eingebaut.

Weiterhin weist die Werkzeugmaschine 11 einen Schrank 12 auf, der im Rahmen des Ausführungsbeispiels als Schaltschrank ausgebildet ist und die zur Steuerung und Regelung benötigten Komponenten der Werkzeugmaschine enthält. Der Schrank 12 ist über elektrische Verbindungen 13 mit den Motoren und Gebern der Werkzeugmaschine, elektrisch verbunden. Im Rahmen des Ausführungsbeispiels ist dabei die erfindungsgemäße Bedieneinrichtung 1 in den Schrank 12 eingebaut, wobei die Bedieneinrichtung 1 in die Tür des Schranks 12 eingebaut ist, so dass von außen über den Schrank auch eine Bedienung der Werkzeugmaschine möglich ist. Es sei an dieser Stelle angemerkt, dass allgemein gesprochen die erfindungsgemäße Bedieneinrichtung bei Maschinen aus der Automatisierungstechnik stationär im Bedienpult der Maschine und/oder in einem Schrank, insbesondere einem Schaltschrank der Maschine, eingebaut sein kann.

Es sei an dieser Stelle ebenfalls angemerkt, dass im Rahmen der Erfindung unter einem Einbau in einen Schrank einer Maschine aus der Automatisierungstechnik unter anderem insbesondere auch ein Einbau in eine Tür des Schranks einer Maschine aus der Automatisierungstechnik verstanden wird.

Es sei weiterhin an dieser Stelle angemerkt, dass im Rahmen der Erfindung unter einer Bedienung einer Maschine aus der Automatisierungstechnik unter anderem insbesondere auch eine Programmierung der Maschine und die Durchführung von Simulationen zu Bearbeitungsvorgängen verstanden werden.

Weiterhin sei an dieser Stelle angemerkt, dass anstelle der beiden Finger, z.B. zum Drehen des Objekts, z.B. auch eine Hand auf den Bildschirm gelegt werden kann und dann zur Veränderung des Objekts z.B. gedreht werden kann, so dass mehr wie zwei Berührungsorte, welche detektiert werden und örtliche Verläufe der Berührungsorte, vorhanden sind.

## Patentansprüche

1. Bedieneinrichtung zur Bedienung einer Maschine (11) aus der Automatisierungstechnik, wobei die Bedieneinrichtung (1) zum stationären Einbau in einen Bedienpult (10) der Maschine (11) und/oder in einen Schrank (12) der Maschine (11) ausgebildet ist, wobei die Bedieneinrichtung (1) einen berührungsempfindlichen Bildschirm (2) aufweist, wobei von dem Bildschirm (2) die Berührungsorte (4a,4b) von mindestens zwei an unterschiedlichen Stellen des Bildschirms (2) gleichzeitig stattfindenden Berührungen des Bildschirms (2) detektierbar sind, wobei die Bedieneinrichtung (1) derart ausgebildet ist, dass bei einer detektierten gleichzeitigen Änderung der Berührungsorte (4a,4b), entsprechend den örtlichen Verläufen der Berührungsorte (4a,4b), ein von dem Bildschirm (2) der Bedieneinrichtung (1) visualisiertes Objekt (3) auf dem Bildschirm (2) verändert dargestellt wird.

2. Bedieneinrichtung nach Anspruch 1, **dadurch gekennzeichnet, dass** das Objekt (3) vergrößert dargestellt wird, wenn die örtlichen Verläufe der Berührungsorte (4a,4b) in entgegengesetzt und auseinander verlaufenden Richtungen verlaufen.

3. Bedieneinrichtung nach einem der vorhergehenden Ansprüche, **dadurch gekennzeichnet, dass** das Objekt (3) verschoben dargestellt wird, wenn die örtlichen Verläufe der Berührungsorte (4a,4b) in gleiche Richtungen verlaufen.

4. Bedieneinrichtung nach einem der vorhergehenden Ansprüche, **dadurch gekennzeichnet, dass** das das Objekt (3) gedreht dargestellt wird, wenn die örtlichen Verläufe der Berührungsorte (4a,4b) einen kreisbogenförmigen Verlauf aufweisen.

5. Bedieneinrichtung nach einem der vorhergehenden Ansprüche, **dadurch gekennzeichnet, dass** die Berührungsorte (4a,4b) über dem am Bildschirm (2) dargestellten Objekt (3) liegen.

6. Bedieneinrichtung nach einem der vorhergehenden Ansprüche, **dadurch gekennzeichnet, dass** die Maschine aus der Automatisierungstechnik als Werkzeugmaschine, Produktionsmaschine und/oder als Roboter ausgebildet ist.

7. Bedienpult einer Maschine aus der Automatisierungstechnik mit einer Bedieneinrichtung nach einem der vorhergehenden Ansprüche.

8. Schrank einer Maschine aus der Automatisierungstechnik mit einer Bedieneinrichtung nach einem der Ansprüche 1 bis 6.
